# FASCICULE DE BREVET EUROPEEN

(11) **EP 2 283 102 B1**
(45) Date de publication et mention de la délivrance du brevet: **26.11.2014**
(21) Numéro de dépôt: 09772677.2
(22) Date de dépôt: 14.05.2009
(51) Int. Cl.: C09K 3/30, C09K 5/04, C08J 9/14

(54) **COMPOSITIONS A BASE D'HYDROFLUOROOLEFINES**
HYDROFLUOROLEFINZUSAMMENSETZUNGEN
HYDROFLUOROOLEFIN COMPOSITIONS

(30) Priorité: 11.06.2008 FR 0853860
(43) Date de publication de la demande: 16.02.2011
(73) Titulaire: Arkema France, 92700 Colombes (FR)
(72) Inventeur: RACHED, Wissam, F-69630 Chaponost (FR)
(74) Mandataire: Dang, Doris
(86) Numéro de dépôt international: PCT/FR2009/050890
(87) Numéro de publication internationale: WO 2010/000994

(56) Documents cités:
- WO-A-2006/094303
- WO-A-2008/009922
- US-A1- 2007 007 488

## Description

La présente invention concerne des compositions renfermant des hydrofluorooléfines et leurs utilisations comme fluides de transfert de chaleur, agents d'expansion, solvants et aérosols.

Les problèmes posés par les substances appauvrissant la couche d'ozone atmosphérique (ODP : ozone depletion potential) ont été traités à Montréal où a été signé le protocole imposant une réduction de la production et de l'utilisation des chlorofluorocarbures (CFC). Ce protocole a fait l'objet d'amendements qui ont imposé l'abandon des CFC et étendu la réglementation à d'autres produits, dont les hydrochlorofluorocarbones (HCFC).

L'industrie de la réfrigération et de la production d'air conditionné a beaucoup investi dans la substitution de ces fluides frigorigènes et c'est ainsi que les hydrofluorocarbures (HFC) ont été commercialisés.

Les (hydro)chlorofluorocarbures utilisés comme agents d'expansion ou solvants ont également été substitués par des HFC.

Dans l'industrie automobile, les systèmes de climatisation des véhicules commercialisés dans de nombreux pays sont passés d'un fluide frigorigène au chlorofluorocarbure (CFC-12) à celui de l'hydrofluorocarbure (1,1,1,2 tetrafluoroéthane : HFC-134a), moins nocif pour la couche d'ozone. Cependant, au regard des objectifs fixés par le protocole de Kyoto, le HFC-134a (GWP = 1300) est considéré comme ayant un pouvoir de réchauffement élevé. La contribution à l'effet de serre d'un fluide est quantifiée par un critère, le GWP (Global Warming Potentials) qui résume le pouvoir de réchauffement en prenant une valeur de référence de 1 pour le dioxyde de carbone.

Le dioxyde de carbone étant non-toxique, ininflammable et ayant un très faible GWP, a été proposé comme fluide frigorigène des systèmes de climatisation en remplacement du HFC-134a. Toutefois, l'emploi du dioxyde de carbone présente plusieurs inconvénients, notamment liés à la pression très élevée de sa mise en oeuvre en tant que fluide frigorigène dans les appareils et technologies existants.

Le document JP 4110388 décrit l'utilisation des hydrofluoropropènes de formule C₃HₘFₙ, avec m, n représentant un nombre entier compris entre 1 et 5 inclus et m + n = 6, comme fluides de transfert de chaleur, en particulier le tetrafluoropropène et le trifluoropropène.

Le document WO2004/037913 divulgue l'utilisation des compositions comprenant au moins un fluoroalcène ayant trois ou quatre atomes de carbone, notamment le pentafluoropropène et le tetrafluoropropène, de préférence ayant un GWP au plus de 150, comme fluides de transfert de chaleur.

Le document WO 2005/105947 enseigne l'ajout au tetrafluoropropène, de préférence le 1,3,3,3 tetrafluoropropène, d'un co-agent d'expansion tels que le difluoromethane, le pentafluoroéthane, le tetrafluoroéthane, le difluoroéthane, l'heptafluoropropane, l'hexafluoropropane, le pentafluoropropane, le pentafluorobutane, l'eau et le dioxyde de carbone.

Le document WO 2006/094303 divulgue une composition azéotropique contenant 7,4 % en poids du 2,3,3,3 tetrafluoropropène (1234yf) et 92,6 % en poids du difluorométhane (HFC-32). Ce document divulgue également une composition azéotropique contenant 91 % en poids du 2,3,3,3 tetrafluoropropène et 9 % en poids du difluoroéthane (HFC-152a).

Le document WO 2008/009922 divulgue des compositions de transfert de chaleur comprenant du pentafluoropropène, du tétrafluoropropène et au moins un réfrigérant choisi parmi le dioxyde de carbone, le difluorométhane, le 1,1,1,2-tétrafluoroéthane, le 3,3,3,-trifluoropropène, le 1,1,-difluoroéthane, le propane, le propène, l'isobutane ou le n-butane.

Le document US 2007/0007488 divulgue des compositions de transfert de chaleur comprenant au moins un fluoroalcène ayant un nombre de carbone compris entre 3 et 6.

La demanderesse a maintenant mis au point des compositions renfermant des hydrofluoropropènes ne présentant pas les inconvénients précités et ayant à la fois un ODP nul et un GWP inférieur à celui des fluides de transfert de chaleur existants comme le R404A (mélange ternaire du pentafluoroéthane (44 % en poids), trifluoroéthane (52 % en poids) et HFC-134a (4 % en poids)) et le R407C (mélange ternaire du HFC-134a (52 % en poids), HFC-125 (25 % en poids) et HFC-32 (23 % en poids)).

Les compositions selon la présente invention sont caractérisées en ce qu'elles comprennent de 2 à 55 % en poids du 2,3,3,3 tetrafluoropropène, de 2 à 55 % en poids du HFC-152a et de 30 à 55 % en poids du HFC-32.

Selon un mode préféré de l'invention, les compositions comprennent de 30 à 45 % en poids du HFC-32, de 30 à 53 % en poids du 2,3,3,3 tetrafluoropropène et de 2 à 20 % en poids du HFC-152a.

Les compositions comprenant 40 % en poids du HFC-32, 50 % en poids du 2,3,3,3 tetrafluoropropène et 10 % en poids du HFC-152a sont particulièrement intéressantes.

Avantageusement, les compositions selon la présente invention contiennent essentiellement du 2,3,3,3 tetrafluoropropène, du HFC-152a et du HFC-32, comme hydrofluorocarbures (saturés ou insaturés).

Les compositions selon la présente invention peuvent être utilisées comme fluides de transfert de chaleur, de préférence dans les systèmes à compression et conviennent particulièrement pour la réfrigération, de préférence en remplacement du R-404A, et du HCFC-22 (chlorodifluorométhane).

Les compositions selon la présente invention conviennent également pour les systèmes à compression pour l'air conditionné et le chauffage, notamment les pompes à chaleur, de préférence en remplacement du R407C et du HFC-134a.

Les compositions selon la présente invention peuvent comprendre un stabilisant du 2,3,3,3 tetrafluoropropène. Le stabilisant représente au plus 5 % en poids par rapport à la composition totale.

Comme stabilisants, on peut citer notamment le nitromethane, l'acide ascorbique, l'acide terephtalique, les azoles tels que le tolutriazole ou le benzotriazole, les composés phénoliques tels que le tocopherol, l'hydroquinone, le t-butyl hydroquinone, le 2,6-di-ter-butyl-4-methylphenol, les epoxydes (alkyl éventuellement fluoré ou perfluoré ou alkenyl ou aromatique) tels que les n-butyl glycidyl ether, hexanediol diglycidyl ether, allyl glycidyl ether, butylphenylglycidyl ether, les phosphites, les phosphates, les phosphonates, les thiols et lactones.

Les compositions selon la présente invention peuvent comprendre des lubrifiants tels que l'huile minérale, alkylbenzène, le polyalkylène glycol et le polyvinyl éther.

Les compositions selon la présente invention sont en outre utilisables comme agents d'expansion, aérosols et solvants.

### PARTIE EXPERIMENTALE

Les performances des compositions selon l'invention dans les conditions de fonctionnement de réfrigération sont données dans le Tableau 1. Les valeurs des constituants (1234yf, 32 et 152a) pour chaque composition sont données en pourcentage en poids.

Pour le R404A la pression nominale de fonctionnement est de 1829 kPa, la capacité volumétrique est de 1471 kJ/m³ et le COP est de 1,8 dans les conditions de fonctionnement suivantes :

| | |
|---|---|
| Température d'évaporation | : -20°C |
| Température de condensation | : 40°C |
| Température entrée compresseur | : -5°C |
| Température du liquide sous refroidi | : 35°C |
| Rendement isentropique du compresseur | : 70 % |

Evap P : pression à l'évaporateur
Cond P : pression au condenseur
Taux : le taux de compression
T sortie comp : température à la sortie compresseur
COP : coefficient de performance et est défini, lorsqu'il s'agit de la réfrigération comme étant la puissance froide utile fournie par le système sur la puissance apportée ou consommée par le système.
La capacité volumétrique et le COP sont équivalents ou même supérieurs aux valeurs données par le R404A.

**Tableau 1**

| **Compositions** | | | **evap P (kpa)** | **cond P (kPa)** | **Taux (P/P)** | **T sortie comp** | **Capacité (KJ/m3)** | **COP** |
|---|---|---|---|---|---|---|---|---|
| **R404A** | | | 300 | 1829,00 | 6,10 | 76 | 1471 | 1,8 |

| **1234yf** | **32** | **152a** | | | | | | |
|---|---|---|---|---|---|---|---|---|
| 10 | 40 | 50 | 198 | 1737 | 8,77 | 131,67 | 1291,38 | 1,8 |
| 20 | 40 | 40 | 212 | 1792 | 8,45 | 126,85 | 1344,26 | 1,8 |
| 30 | 40 | 30 | 227 | 1851 | 8,12 | 121,99 | 1404,02 | 1,8 |
| 40 | 40 | 20 | 244 | 1917 | 7,84 | 117,43 | 1466,01 | 1,8 |
| 50 | 40 | 10 | 260 | 1990 | 7,64 | 113,55 | 1522,01 | 1,8 |

Les performances des compositions selon la présente invention dans les conditions de fonctionnement de pompe à chaleur et climatisation sont données dans le Tableau 2. Les valeurs des constituants (1234yf, 32 et 152a) pour chaque composition sont données en pourcentage en poids.

Pour le R407C, la pression nominale de fonctionnement est de 3442 kPa, la capacité volumétrique est de 1461 kJ/m³ et le COP est de 2,1 dans les conditions de fonctionnement suivantes :

| | |
|---|---|
| Température d'évaporation | : -5°C |
| Température de condensation | : 70°C |
| Température entrée compresseur | : 5°C |
| Température du liquide sous refroidi | : 65°C |
| Rendement isentropique du compresseur | : 70 % |

Evap P : pression à l'évaporateur
Cond P : pression au condenseur
Taux : le taux de compression
T sortie comp : température à la sortie compresseur
COP : coefficient de performance et est défini, lorsqu'il s'agit d'une pompe à chaleur, comme étant la puissance chaude utile fournie par le système sur la puissance apportée ou consommée par le système.
Dans les mêmes conditions les compositions selon la présente invention fournissent une capacité supérieure à la capacité du R407C et permettent l'utilisation des installations de taille inférieure, la réduction de la quantité du fluide à mettre en oeuvre et aussi la réduction du coût de l'installation.

**Tableau 2**

| **Compositions** | | | **evap P (kpa)** | **cond P (kPa)** | **Taux (p/p)** | **T sortie comp** | **Capacité (KJ/m3)** | **COP** |
|---|---|---|---|---|---|---|---|---|
| **R407C** | | | 385,68 | 3442 | 8,93 | 126,60 | 1461 | 2,1 |

| **1234yf** | **32** | **152a** | | | | | | |
|---|---|---|---|---|---|---|---|---|
| 60 | 40 | 0 | 478 | 3971 | 8 | 133 | 1503 | 1,9 |
| 55 | 40 | 5 | 467 | 3884 | 8 | 134 | 1566 | 2,0 |
| 50 | 40 | 10 | 455 | 3805 | 8 | 136 | 1607 | 2,1 |
| 45 | 40 | 15 | 442 | 3733 | 8 | 137 | 1631 | 2,1 |
| 40 | 40 | 20 | 429 | 3668 | 9 | 139 | 1644 | 2,1 |

## Revendications

1. Compositions comprenant de 2 à 55 % en poids du 2,3,3,3 tetrafluoropropène, de 2 à 55 % en poids du HFC-152a et de 30 à 55 % en poids du HFC-32.

2. Compositions selon la revendication 1 **caractérisées en ce qu'**elles comprennent de 30 à 45 % en poids du HFC-32, de 30 à 53 % en poids du 2,3,3,3 tetrafluoropropène et de 2 à 20 % en poids du HFC-152a.

3. Compositions selon la revendication 1 ou 2 **caractérisées en ce qu'**elles comprennent de 40 % en poids du HFC-32, 50 % en poids du 2,3,3,3 tetrafluoropropène et 10 % en poids du HFC-152a.

4. Compositions selon l'une quelconque des revendications précédentes **caractérisées en ce qu'**elles contiennent essentiellement du 2,3,3,3 tetrafluoropropène, du HFC-152a et du HFC-32.

5. Fluides de transfert de chaleur comprenant les compositions selon l'une quelconque des revendications précédentes.

6. Fluides de transfert de chaleur selon la revendication 5 **caractérisés en ce qu'**ils sont utilisés en réfrigération en remplacement du R404A et HCFC-22.

7. Fluides de transfert de chaleur selon la revendication 5 **caractérisés en ce qu'**ils sont utilisés dans l'air conditionné et le chauffage en remplacement du R407C et HFC-134a.

8. Agents d'expansion comprenant les compositions selon l'une quelconque des revendications 1 à 5.

9. Aérosols comprenant les compositions selon l'une quelconque des revendications 1 à 5.

10. Solvants comprenant les compositions selon l'une quelconque des revendications 1 à 5.

## Patentansprüche

1. Zusammensetzungen, umfassend 2 bis 55 Gew.-% 2,3,3,3-Tetrafluorpropen, 2 bis 55 Gew.-% H-FKW 152a und 30 bis 55 Gew.-% H-FKW 32.

2. Zusammensetzungen nach Anspruch 1, **dadurch gekennzeichnet, dass** sie 30 bis 45 Gew.-% H-FKW 32, 30 bis 53 Gew.-% 2,3,3,3-Tetrafluorpropen und 2 bis 20 Gew.-% H-FKW 152a umfassen.

3. Zusammensetzungen nach Anspruch 1 oder 2, **dadurch gekennzeichnet, dass** sie 40 Gew.-% H-FKW 32, 50 Gew.-% 2,3,3,3-Tetrafluorpropen und 10 Gew.-% H-FKW 152a umfassen.

4. Zusammensetzungen nach einem der vor hergehenden Ansprüche, **dadurch gekennzeichnet, dass** sie, im Wesentlichen 2,3,3,3-Tetrafluorpropen, H-FKW 152a und H-FKW 32 enthalten.

5. Wärmeübertragungfluide, umfassend die Zusammensetzungen nach einem der vorhergehenden Ansprüche.

6. Wärmeübertragungfluide nach Anspruch 5, **dadurch gekennzeichnet, dass** sie beim Kühlen als Ersatz für R404A und H-FCKW 22 verwendet werden.

7. Wärmeübertragungfluide nach Anspruch 5, **dadurch gekennzeichnet, dass** sie beim Klimatisieren und Erwärmen als Ersatz für R407C und H-FKW 134a verwendet werden.

8. Treibmittel, umfassend die Zusammensetzungen nach einem der Ansprüche 1 bis 5.

9. Aerosole, umfassend die Zusammensetzungen nach einem der Ansprüche 1 bis 5.

10. Lösungsmittel, umfassend die Zusammensetzungen nach einem der Ansprüche 1 bis 5.

## Claims

1. Compositions comprising from 2 to 55% by weight of 2,3,3,3-tetrafluoropropene, from 2 to 55% by weight of HFC-152a and from 30 to 55% by weight of HFC-32.

2. Compositions according to Claim 1, **characterized in that** they comprise from 30 to 45% by weight of HFC-32, from 30 to 53% by weight of 2,3,3,3-tetrafluoropropene and from 2 to 20% by weight of HFC-152a.

3. Compositions according to Claim 1 or 2, **characterized in that** they comprise 40% by weight of HFC-32, 50% by weight of 2,3,3,3-tetrafluoropropene and 10% by weight of HFC-152a.

4. Compositions according to any one of the preceding claims, **characterized in that** they essentially comprise 2,3,3,3-tetrafluoropropene, HFC-152a and HFC-32.

5. Heat transfer fluids comprising the compositions according to any one of the preceding claims.

6. Heat transfer fluids according to Claim 5, **characterized in that** they are used in refrigeration as replacement for R404A and HCFC-22.

7. Heat transfer fluids according to Claim 5, **characterized in that** they are used in air conditioning and heating as replacement for R407C and HFC-134a.

8. Blowing agents comprising the compositions according to any one of Claims 1 to 5.

9. Aerosols comprising the compositions according to any one of Claims 1 to 5.

10. Solvents comprising the compositions according to any one of Claims 1 to 5.
